# DEMANDE DE BREVET EUROPEEN

(11) **EP 1 092 471 A1**
(43) Date de publication de la demande: **18.04.2001**
(21) Numéro de dépôt: 00402735.5
(22) Date de dépôt: 05.10.2000
(51) Int. Cl.: B01J 20/26, B01D 37/02

(54) **Adjuvant de filtration de liquides et son utilisation pour la décontamination microbienne**

(30) Priorité: 11.10.1999 FR 9912619
(71) Demandeur: Eurochem (Société Anonyme), 75008 Paris (FR)
(72) Inventeur: De la Bruniere, Patrick, 75016 Paris (FR)
(74) Mandataire: Lhuillier, René

(57) **Abrégé**

L'invention concerne un adjuvant de filtration de liquides assurant l'élimination de microorganismes contaminants, qui est constitué de poudre de polylactame obtenue par polymérisation de lactame monocyclique par catalyse anionique en milieu liquide. Il est particulièrement destiné à être intégré dans un procédé de préparation d'eau potable.

## Description

L'invention concerne un adjuvant de filtration de liquides assurant l'élimination de microorganismes contaminants, qui est constitué de poudre de polylactame obtenue par polymérisation de lactame monocyclique par catalyse anionique en milieu liquide. Il est particulièrement destiné à être intégré dans un procédé de préparation d'eau potable.

L'eau potable est obtenue à partir de prélèvements de réserves naturelles, par décantation, filtration sur lit de sable, puis traitement chimique par le chlore ou l'ozone.

Des améliorations de ces traitements sont encore à l'étude, notamment pour éviter la dénaturation du goût de l'eau par les traitements chimiques et surtout pour en améliorer la sécurité bactériologique.

Les principales voies de recherche portent d'une part sur l'ultrafiltration ou la nanofiltration sur membranes et d'autre part sur la filtration sur charbon actif et sur charbon actif dopé.

Le meilleur charbon actif couramment utilisé est à base de noix de coco (capacité de rétention de 4.10⁷ à 1.10⁸ E. coli par cm³). Un résultat supérieur a pu être obtenu avec du charbon actif dopé à l'argent (métal pur) selon une technologie développée par Cartis® (capacité de rétention de 1,5.10⁸ E.coli par cm³). A titre de référence, le sable présente une capacité de rétention de 2 10⁶ E. coli/cm³.

L'objet de l'invention est de proposer une alternative au charbon actif, présentant une capacité de rétention bactérienne supérieure et permettant un recyclage plus simple et donc moins coûteux.

La Demanderesse a découvert des propriétés surprenantes d'une poudre de polylactame qui, à l'état hydraté, présente une capacité élevée d'adsorption et de rétention des bactéries, des levures et des microrganismes parasitaires.

Elle a ainsi été amenée à envisager son utilisation comme filtre ou comme adjuvant de filtration pour la décontamination de liquides et, tout particulièrement, pour la production d'eau potable.

Les propriétés de la poudre de polylactame selon l'invention sont liées à son procédé de préparation. Celui-ci est une variante d'un procédé connu et décrit dans le brevet US 3, 061, 592 (1962).

Ce brevet décrit un procédé de production de polyamides sous forme de granules sphéroïdes, connu sous le nom de polymérisation anionique (c'est-à-dire faisant appel à l'ouverture du cycle lactame et la génération d'un carbanion)

Ce procédé comprend la mise en solution d'un lactame monocyclique dans un solvant organique dans lequel ledit lactame est soluble, l'addition d'un catalyseur de polymérisation de type métal alcalin et d'un accélérateur de polymérisation choisi parmi les isocyanates organiques, les carbodiimides et les cyanamides, et l'addition d'agent dispersant constitué de poudre de polyamide et de talc. Le procédé comprend ensuite le chauffage du mélange à une température supérieure au point de fusion du lactame mais inférieure à celui du polyamide, soit de l'ordre de 100 à 150°C. Après polymérisation, le produit est filtré à chaud pour éliminer les lactames non polymérisés, puis il est lavé et séché.

Le procédé est effectué en milieu liquide, par opposition à des procédés antérieurs dans lesquels la polymérisation était effectuée "in situ" dans des moules, ce qui impliquait un traitement mécanique ultérieur pour réduire la masse de polymère en poudre.

Le brevet précise que plus la température de polymérisation est élevée plus la taille des granules obtenus est fine et que, d'autre part, une réduction de la vitesse d'agitation du mélange provoque la formation de granules de plus grandes tailles.

La poudre mise en oeuvre dans la présente invention est préparée par polymérisation par catalyse anionique en milieu liquide, comme décrit dans le brevet US 3, 061, 592, en utilisant
- comme monomère de lactame cyclique, du lactame 6 ou caprolactame, du lactame 12 ou lauryllactame, ou un mélange des deux ;
- et en utilisant de la silice micronisée comme agent dispersant, qui joue le rôle d'initiateur de polymérisation.
La poudre de polymère ainsi obtenue présente les caractéristiques suivantes :
- elle est constituée de particules présentant, à l'observation en microscopie électronique, un aspect caractéristique de petits amas de sphères agglutinées (et non des sphères indépendantes, comme d'autres polymères similaires) d'une taille de 20 à 80 microns ;
- ces particules présentent de nombreuses microporosités de 0,01 à 3 microns.

Comme cela apparaîtra dans les exemples, la poudre selon l'invention peut être utilisée dans une colonne dont la partie inférieure présente une couche de verre fritté et de laine de verre ; avant sa mise en oeuvre la poudre doit être hydratée pour assurer sa répartition uniforme dans la colonne ; la poudre est introduite dans la colonne en suspension aqueuse et, après décantation, elle est maintenue avec un excès de liquide au-dessus de sa surface supérieure.

La colonne ainsi préparée permet de filtrer des liquides artificiellement contaminés avec des bactéries ou d'autres microorganismes afin de mesurer la capacité de rétention de la poudre.

Ainsi la Demanderesse a pu montrer que la poudre peut retenir 10⁷ bactéries E. coli par gramme de poudre, par filtration d'une suspension inoculée à 10⁶ bactéries/ml, ces conditions extrêmes correspondant au degré de saturation de la poudre.

Contrairement à ce qu'on observe avec les charbons actifs, la capacité de rétention bactérienne n'est pas proportionnelle à la surface spécifique des particules, qui n'est que de 15 m²/gramme, mais elle est beaucoup plus grande, grâce à l'existence des microporosités à l'intérieur des particules.

Les capacités exceptionnelles de rétention des bactéries de la poudre de polylactame ainsi mises en évidence en font un matériau de choix comme étape additionnelle ou alternative dans les procédés classiques de filtration de liquides et, plus particulièrement, pour rendre l'eau potable en assurant la décontamination microbienne d'eau prélevée dans une réserve naturelle quelconque.

Ainsi l'invention concerne l'utilisation de la poudre de polylactame à titre d'adjuvant de filtration, en remplacement ou en complément des étapes classiques de filtration utilisées couramment dans les procédés de préparation d'eau potable et, notamment, en remplacement du traitement chimique et/ou en remplacement de l'étape de filtration sur charbon actif.

La poudre de polylactame est, en outre, particulièrement avantageuse parce qu'elle peut être recyclée par simple stérilisation.

L'utilisation de la poudre de polylactame est aisément applicable à n'importe quelle échelle : elle peut s'intégrer dans un procédé industriel de filtration sur colonnes ou sur cartouches comprenant plusieurs couches de matériau filtrant, procédé assurant la purification de l'eau destinée à la distribution courante ; elle peut également s'intégrer dans un dispositif portable comportant également plusieurs couches de matériaux filtrants, de type colonne ou paille pour aspiration de boisson, destiné à la décontamination de l'eau de boisson individuelle, notamment pour les voyageurs n'ayant pas accès à une eau de qualité bactériologique sûre.

La poudre de polylactame peut également être utilisée comme étape préliminaire à la filtration de l'eau, quand celle-ci présente un degré élevé de contamination. On l'utilise dans ce cas dans un procédé "en batch" c'est-à-dire par contact en milieu confiné entre la poudre préalablement hydratée et le liquide contaminé dans lequel la poudre est mise en solution. Après un contact, sous légère agitation et d'une durée suffisante pour assurer l'adsorption des bactéries, la solution est filtrée selon des méthodes classiques, par exemple sur filtre de sable ou de verre fritté, de manière à retenir le polymère de polylactame ayant adsorbé les bactéries et à récupérer l'eau décontaminée.

L'invention concerne donc également les procédés de préparation d'eau potable comportant l'utilisation de poudre de polylactame comme adjuvant de filtration à forte capacité de rétention des contaminants microbiens, soit comme étape additionnelle ou alternative de filtration, soit comme étape préalable à la filtration, lesdits procédés étant applicables aussi bien à l'échelle industrielle qu'à l'échelle individuelle sous forme de dispositif portable.

Les exemples suivants illustrent l'invention sans toutefois en limiter la portée.

### Exemple 1. Production de la poudre de polylactame.

Le procédé de production de la poudre de polylactame est une application particulière d'un procédé connu et décrit en 1962 par la société Bayer dans le brevet US 3, 061, 592.

Le procédé est appliqué, tel que décrit dans ce brevet, en utilisant
- comme monomère, du lactame 6, ou caprolactame ;
- comme solvant, du White Spirit ;
- comme catalyseur de polymérisation, de l'isocyanate de stéaryle ;
- comme agent dispersant et initiateur de polymérisation, de la silice micronisée.
La réaction de polymérisation est effectuée à 140°C.

La poudre de polymère obtenue, appelée 64 B 87 ci-après, présente les caractéristiques suivantes :
- particules présentant, en microscopie électronique, un aspect de grappes de raisin, d'une taille de 20 à 80 microns ;
- de nombreuses microporosités de 0,01 à 3 microns ;
- une surface spécifique au moins égale à 15 m²/grammes ;
- un point de fusion de 210 à 215°C.
La poudre se conserve à l'état sec.

Avant son utilisation et incubation elle doit être hydratée (par mise en solution dans du tampon à 110°C pendant une nuit) pour éviter qu'une partie de la poudre ne flotte à la surface du liquide à décontaminer, lors de son utilisation.

### Exemple 2. Utilisation de la poudre dans un procédé de filtration sur colonne d'eau contaminée.

L'évaluation de la capacité de rétention de bactéries de la poudre 64 B 87 a été réalisée dans un système modèle dont l'extrapolation à l'échelle pilote est facile à concevoir.

Le système comprend
- des colonnes en verre dont l'extrémité inférieure est en verre fritté protégé par un tampon de laine de verre pour éviter son colmatage ;
- sur la laine de verre, une couche de poudre 64 B 87 hydratée en tampon phosphate (PBS), stérile ;
- un ensemble pompe péristaltique, trompe à vide et les tubes et tuyaux nécessaires, qui permet d'ajuster le débit du liquide à filtrer au travers de la colonne ;
- des récipients contenant les liquides à filtrer qui sont successivement
   - de la solution PBS stérile
   - de la solution inoculée avec des bactéries
   - de la solution PBS stérile
- des flacons de récupération d'échantillons de filtrat, destinés à la numération des bactéries non retenues par le système de filtration.

### Mode opératoire.

L'ensemble du procédé est réalisé en tampon phosphate (PBS) à pH 7,4.

### • Préparation de la poudre (hydratation)

La poudre sèche est mélangée, sous agitation, au tampon PBS puis placée à l'étuve à 110°C pendant une nuit. La poudre hydratée est ensuite stockée dans la solution de tampon PBS jusqu'à utilisation.

### • Préparation des colonnes.

Les tests de filtration sont réalisés avec des colonnes en verre de 3 cm de diamètre. La masse de poudre hydratée choisie, 100 g par test, est placée dans la colonne avec un excès de solution PBS. Après homogénéisation et décantation, la colonne contenant la poudre hydratée est stérilisée à l'autoclave à 121°C pendant 20 minutes.

L'ensemble du matériel (flacons, tuyaux, tubes de verre) également stérilisé dans les mêmes conditions.

### • Préparation des suspensions de bactéries Escherichia coli.

Les suspensions de Escherichia coli sont préparées à partir de cultures réalisées en milieu de bouillon nutritif. Un volume donné de milieu de culture concentré est introduit dans 1 litre de solution de PBS stérile pour obtenir la concentration bactérienne souhaitée.

La concentration en Escherichia coli dans la suspension est déterminée immédiatement après la réalisation de la suspension et celle-ci est utilisée dans les heures qui suivent sa préparation.

### • Montage pour les essais de filtration.

La colonne de filtration est alimentée en solution à filtrer par l'intermédiaire d'une pompe péristaltique permettant de régler le débit de solution injectée.

Le flacon contenant la solution à filtrer est placé sur une balance de façon à mesurer avec précision le débit injecté dans la colonne.

A l'intérieur de la colonne, la solution est introduite par l'intermédiaire d'un tube de verre dont l'extrémité arrive dans le tampon excédentaire, à proximité de la surface de la poudre afin d'éviter la création de turbulences et la remise en suspension de la poudre.

En sortie de colonne, une trompe à vide est installée pour augmenter et réguler le débit de filtration. Le filtrat est récupéré dans une fiole à vide stérile, qui est remplacée pour chaque fraction prélevée.

Lors des essais, la pompe péristaltique et la trompe à vide sont réglées de façon à ce que le débit injecté et le débit soutiré soient identiques et qu'il n'y ait pas de variations de niveau de liquide dans la colonne.

Ce dispositif permet d'assurer un débit satisfaisant et stable tout au long du test, de l'ordre de 30 ml par minute.

### Résultats

Les solutions filtrées successivement sont les suivantes :
- 500 ml de solution PBS stérile (contrôle de la stérilité de la colonne)
- 1000 ml de PBS inoculé avec Escherichia coli à environ 10⁶ bactéries/ml ;
- 1000 ml de PBS stérile
7 prélèvements de filtrat sont effectués
- 300 ml de filtrat de PBS stérile (après évacuation du volume mort de la colonne et d'une première fraction d'environ 100 ml)
- 3 fractions de 100 ml de filtrat de la suspension de bactéries (en début d'élution après évacuation des premiers 100 ml, en milieu d'élution et en fin d'élution)
- 3 fractions de 100 ml de filtrat de PBS stérile, dans les mêmes conditions.
Les résultats expérimentaux sont présentés dans le tableau ci-dessous.

**Tableau 1**

| | | **Concentration en Escherichia coli/100 ml** | | | |
|---|---|---|---|---|---|
| | Fractions | Colonne 1 | Colonne 2 | Colonne 3 | Colonne 4 |
| Solution de bactéries initiale | | 8,5 10⁷ | 1 10⁸ | 8,3 10⁷ | 7 10⁷ |
| Filtrat du PBS stérile | | 0 | 0 | 0 | 0 |
| Filtrat du PBS inoculé (3 fractions) | 1 | 0 | 0 | 0 | 0 |
| | 2 | 0 | 0 | 0 | 0 |
| | 3 | 0 | 0 | 0 | 0 |
| Filtrat du PBS stérile (3 fractions) | 1 | 0 | 0 | 0 | 0 |
| | 2 | 0 | 0 | 0 | 0 |
| | 3 | 0 | 0 | 0 | 0 |

Ces résultats montrent que dans les conditions expérimentales appliquées, les bactéries Escherichia coli sont retenues à 100 % sur la colonne de poudre.

La quantité maximale de bactéries retenues est de l'ordre de 10⁹ pour 100 g de poudre hydratée (1 litre de solution filtrée par colonne) ou 10⁷ E. coli/g de poudre.

### Tests complémentaires

Deux des colonnes utilisées dans les tests précédents (colonnes 1 et 2) ont été conservées pendant une semaine à l'issue des premiers tests.

48 heures et 7 jours après les premiers tests 300 ml de PBS stérile ont été filtrés sur ces colonnes pour détecter la présence éventuelle de bactéries dans le filtrat.

Après 48 heures, les analyses font apparaître la présence de 6 et 10 bactéries/100 ml. La concentration est supérieure à 300 bactéries/ml après 7 jours (60 à 100 colonies/ml de bactéries aérobies revivifiables à 20°C).

Ces résultats montrent que les bactéries Escherichia coli restent viables dans la poudre et qu'elles peuvent s'y développer. Les concentrations observées après 7 jours de stagnation restent cependant faibles par rapport aux concentrations initialement retenues.

### Exemple 3. Évaluation de la capacité de rétention des bactéries E. coli par la poudre 64 B 87.

Les résultats présentés dans l'exemple 2 ayant montré une efficacité de 100 % de rétention des bactéries par la poudre 64 B 87, de nouveaux tests ont été réalisés selon le même mode opératoire, avec une plus faible quantité de poudre par colonne : 35 grammes, et avec 2 concentrations de bactéries : 4 10⁷ et 2,8 10⁶ bactéries/100 ml afin de quantifier la capacité maximale de rétention de la poudre et de fixer un seuil de sécurité de son utilisation.

On filtre successivement
- 500 ml de solution PBS stérile
- et 5 fois 1000 ml de PBS inoculé avec E. coli, et on effectue 16 prélèvements de filtrat
- 300 ml de filtrat PBS (après évacuation du volume mort de la colonne et de la première fraction de 100 ml)
- et 5 fois 3 fractions de 100 ml de la solution inoculée, à différents temps au cours de la filtration (après élimination des premiers 100 ml).

Les résultats sont présentés dans le tableau suivant.

**Tableau 2**

| | | **Concentrations en Escherichia coli/100 ml** | | |
|---|---|---|---|---|
| | | Colonne 1 | Colonne 2 | Colonne 3 |
| Solution inoculée initiale (moyenne des 5 litres) | | 4 10⁷ | 3,9 10⁷ | 2,8 10⁶ |
| Filtrat PBS stérile (500 ml) | | 0 | 0 | 0 |
| Filtrat PBS inoculé 1^{er} litre (3 fractions) | 1 | 22 | 0 | 0 |
| | 2 | 26 | 20 | 0 |
| | 3 | 38 | 0 | 0 |
| 2^{éme} litre | 1 | 14 | 0 | 0 |
| | 2 | 70 | 400(*) | 0 |
| | 3 | 22 | 240(*) | 0 |
| 3^{ème} litre | 1 | 32 | 46 | 0 |
| | 2 | 10 | 64 | 0 |
| | 3 | 52 | 48 | 0 |
| 4^{ème} litre | 1 | 14 | 44 | 0 |
| | 2 | 24 | 240 | 2 |
| | 3 | 28 | 360 | 0 |
| 5^{ème} litre | 1 | 250 | 300 | 0 |
| | 2 | 140 | >1000 | 0 |
| | 3 | 90 | 180 | 0 |

| | | | | |
|---|---|---|---|---|
| (*) Problème de remise en suspension de la poudre dans la colonne | | | | |

Lors de ces essais, il est apparu que le faible volume de poudre utilisé augmentait le risque d'apparition de chemins préférentiels au sein de la poudre. Par ailleurs, des problèmes de remise en suspension de la poudre ont faussé quelques tests.

Les résultats obtenus montrent que l'efficacité de la filtration n'est pas aussi complète que dans la première série, probablement à cause des conditions de remplissage des colonnes qui induisent la création de chemins préférentiels au travers du lit de poudre.

Toutefois les concentrations en bactéries observées dans le filtrat restent toujours très faibles par rapport aux concentrations initiales.

### Exemple 4. Utilisation de la poudre "en batch".

La poudre 64 B 87 peut également être utilisée "en batch", c'est-à-dire par mise en contact avec la suspension de bactéries, en milieu confiné. Après une durée de contact choisie, la suspension est filtrée sur du verre fritté stérile et les bactéries non retenues par le contact avec la poudre sont dénombrées dans le filtrat.

### Mode opératoire

On inocule une solution de PBS stérile avec des bactéries E. coli à une concentration finale de 5.10⁸/ml

On utilise des flacons de 200 ml stériles.
- Dans 5 flacons on introduit 100 ml de suspension d'E. coli et 10 g de poudre stérile ;
- dans 1 flacon on introduit 100 ml de PBS stérile ;
- dans 1 flacon on introduit 100 ml de suspension d'E. coli sans poudre, pour suivre l'évolution de la culture pendant la durée de l'expérience.

Pendant le contact, les flacons sont placés sur une table d'agitation de manière à assurer une bonne homogénéité de la suspension.

Le contact entre les suspensions de bactéries et la poudre est maintenu pendant 10, 20 et 30 minutes. En fin de contact le contenu de chaque flacon est filtré sur un verre fritté stérile qui retient la totalité de la poudre.

La quantité d'E. coli non retenue par la poudre, présente dans le filtrat, est dénombrée.

Les résultats sont présentés dans le tableau suivant.

**Tableau 3**

| | Concentration en E. coli/ml dans le filtrat | | | | | | |
|---|---|---|---|---|---|---|---|
| Temps de contact | Flacon sans poudre | Batch 1 | Batch 2 | Batch 3 | Batch 4 | Batch 5 | Moyenne |
| 10 min | 4,0 10⁸ | 7,0 10⁷ | 7,0 10⁷ | 1,0 10⁶ | 6,0 10⁷ | 5,0 10⁷ | 6,25 10⁷ |
| 20 min | 4,9 10⁸ | 1,5 10⁷ | 1,5 10⁷ | 1,7 10⁷ | 2,0 10⁷ | 1,7 10⁷ | 1,68 10⁷ |
| 30 min | 3,4 10⁸ | 1,4 10⁷ | 7,4 10⁷ | 1,1 10⁸ | 5,7 10⁷ | 6,2 10⁷ | 8,86 10⁷ |

On observe une diminution de la concentration bactérienne de l'ordre de 1 logarithme entre la quantité mesurée pour les flacons sans poudre et la moyenne des 5 flacons d'expérience. Selon ce mode opératoire, la poudre assure donc une rétention de environ 90 % des bactéries présentes. Dans les conditions de test la poudre est déjà saturée et une augmentation du temps de contact n'améliore pas les résultats.

### Exemple 5. Evaluation de la capacité de rétention de la poudre avec d'autres bactéries-tests.

Un protocole semblable à celui de l'exemple 4 a été mis en oeuvre avec des suspensions bactériennes de Pseudomonas aeruginosa et de Legionella pneumophila.

Les suspensions bactériennes sont préparées dans l'eau distillée stérile extemporanément ; 10 g de poudre stérilisée sont mis en présence de 100 ml de suspension de bactéries titrées (ajustées à 10⁸ bactéries/ml).

Après homogénéisation le mélange est placé sous agitation (incubateur Autobac®) pendant 10 ou 20 minutes.

Ensuite le mélange est filtré sous vide sur verre fritté. Le dénombrement des bactéries résiduelles présentes dans le filtrat est effectué en milieu gélosé (Trypticose® soja agar de BioMérieux) pour P. aeruginosa et en cellule de Malassez (après coloration par de la saframine 0,25 %) pour L. pneumophila. (Cette bactérie ne supporte pas bien le traitement et ne reforme pas des colonies de manière reproductible après le test, ce qui fausse le comptage par repiquage en milieu gélosé).

Tous les tests sont réalisés 5 fois et un contrôle de filtration sur verre fritté en absence de poudre 64 B 87 est effectué avec chaque suspension bactérienne.

Les résultats sont présentés dans les tableaux suivants.

**Tableau 4**

| Pseudomonas aeruginosa. Suspension à 10⁸ bactéries/ml | | | | | |
|---|---|---|---|---|---|
| | Concentration en bactéries exprimées en UFC*/ml dans le filtrat | | | | |
| Temps de contact | Batch 1 | Batch 2 | Batch 3 | Batch 4 | Batch 5 |
| 10 min | 7,60 10⁴ | 2,84 10⁴ | 4,80 10⁴ | 3,80 10⁴ | 2,70 10³ |
| 20 min | 1,22 10⁴ | 0,44 10⁴ | 2,80 10⁴ | 1,08 10⁴ | 1,60 10³ |
| Contrôle (t₀ sans poudre, filtré) | 2,23 10⁸ | 0,68 10⁸ | 2,92 10⁸ | 2,90 10⁸ | 1,48 10⁸ |

| | | | | | |
|---|---|---|---|---|---|
| * Unités formatrices de colonies | | | | | |

On observe donc une diminution de la concentration bactérienne de 3,27 logarithmes après 10 min et de 3,77 logarithmes après 20 minutes de contact avec la poudre.

Le même test a été réalisé avec une suspension de bactéries à 10¹⁰/ml. Dans ces conditions on n'observe qu'une réduction de 0,24 et 0,35 logarithmes après 10 et 20 min, parce que la poudre a atteint son degré de saturation.

**Tableau 5**

| Legionella pneumophila - Suspension à 10⁸ bactéries/ml. | | | | | |
|---|---|---|---|---|---|
| | Concentration en bactéries/ml dans le filtrat | | | | |
| Temps de contact | Batch 1 | Batch 2 | Batch 3 | Batch 4 | Batch 5 |
| 10 min | 0,6 10⁶ | 0,5 10⁶ | 0,5 10⁶ | 6,0 10⁶ | 2,3 10⁶ |
| 20 min | 0,2 10⁶ | 0,2 10⁶ | 1,5 10⁵ | 1,0 10⁶ | 1,8 10⁶ |
| Contrôle (t₀ sans poudre, filtré) | 1,1 10⁸ | 0,2 10⁸ | 0,5 10⁸ | 1,6 10⁸ | 3,6 10⁸ |

On observe donc une diminution de la concentration bactérienne de 1,89 logarithmes après 10 min et de 2,34 logarithmes après 20 minutes de contact avec la poudre.

Le même test a été réalisé avec une suspension de bactéries à 10¹⁰/ml. Dans ces conditions on observe une réduction de 0,54 et 1,02 logarithmes après 10 et 20 minutes, ce qui indique que la capacité maximale de rétention par la poudre est pratiquement atteinte.

L'ensemble des résultats démontre une capacité de rétention bactérienne très importante, avec une cinétique de saturation spécifique de chaque espèce de bactérie.

### Exemple 6. Evaluation de la capacité de rétention de la poudre avec des microorganismes parasitaires.

Le mode opératoire est identique à celui de l'exemple 2, c'est-à-dire par filtration sur colonne d'eau artificiellement contaminée.

On a choisi comme organisme modèle représentatif des microorganismes parasitaires des spores de microsporidies d'Encephalitozoon instestinalis, obtenues sous forme de surnageant de cultures de cellules humaines de glioblastome (U 373).

Les échantillons à tester sont cosntitués de 1 ml de solution des spores à 2.10⁶ spores/ml dilué dans 9 ml d'eau distillée.

Le comptage des spores est effectué selon des méthodes classiques,
- soit en cellule de Kova, selon les références bibliographiques suivantes :
   Dowd, S.E., Gerba, C.P. & Pepper, I.L., 1998. Confirmation of the human pathogenic microsporidia *Enterocytozoon bieneusi, Encephalitozoon instestinalis,* and *Vittaforma corneae* in water. *Appl. Environ. Microbiol.* 9:3332-3335. Dupont, H.L., Chappell, C.R., Sterling, C.R., Okhuysen, P.C., Rose, J.B. and Jakubowski. W. 1995 The infectivity of *Cryptosporidium parvum* in healthy volunteers. N Engl. J. Med. 332:855-859
- soit par PCR, selon
   Sparfel, J.M., Sarfati, C., Liguory, O., Caroff, B., Dumontier, N., Guelio, B., Billaud, E., Raffi, F., Molina, J.M., Miegeville, M. & Derouin, F. 1997 Detection of Microsporidia and identification of *Enterocytozoon bieneusi* in surface water by specific PCR, *J. Euk. Microbiol.*6:78S.
en utilisant comme cible le gène codant pour la petite sous-unité ribosomale de E. intestinalis, le kit d'extraction d'ADN "High pure PCR template preparation" de Roche® et la technique de Taqman pour l'évaluation quantitative.

Les résultats sont présentés dans le tableau suivant :

| | méthode de mesure | Nombre de spores/10 ml avant filtration | Nombre de spores/10 ml après filtration (éluat) |
|---|---|---|---|
| Essai préliminaire sans poudre | Comptage en cellule de Kova | 2 x 10⁶ | 2 x 10⁶ |
| | Taqman | 3,3 x 10⁵ | 3,3 x 10⁵ |
| Essai 1 | Comptage en Cellule de Kova | 10⁶ | 0 |
| | PCR | signal + | 0 signal |
| Essai 2 | Comptage en cellule de Kova | 4 x 10⁶ | 0 |
| | Taqman | 1,9 x 10⁵ | 7 |
| Essai 3 | Comptage en cellule de Kova | 2,4 x 10⁶ | 0 |
| | Taqman | 3,3 x 10⁵ | 0 |

Le comptage ne révèle aucune spore dans l'éluat de la colonne, ni par comptage ni par PCR.

### Exemple 7. Evaluation de la capacité de rétention de la poudre avec des levures.

Le mode opératoire est identique à celui de l'exemple 2.

On a choisi comme organisme représentatif la levure Candida albicans.

On utilise des levures fraîchement mises en culture et récoltées après 24 heures.

La présence de levures dans l'éluat est évaluée par ensemencement sur gélose Sabouraud, au rateau, sur boîte de Pétri de 9 centimètres ; après centrifugation de l'éluat, on ensemence la totalité du culot.

Les résultats sont présentés dans le tableau suivant :

| | Solution de levures avant filtration | Culot de l'éluat après filtration |
|---|---|---|
| Essai I | 10⁵ levures/ml | 0 colonie |
| Essai II | 2,5 x 10⁷ levures/ml | 0 colonie |
| Essai III | 3,5 x 10⁷ levures/ml | 0 colonie |

La totalité des levures est retenue par la poudre 64 B 87 au cours de la filtration sur colonne.

## Revendications

1. Adjuvant de filtration de liquides assurant la rétention des microorganismes contaminants, caractérisé en ce qu'il est constitué de poudre de polylactame obtenue par polymérisation de lactame monocyclique par catalyse anionique en milieu liquide.

2. Adjuvant de filtration selon la revendication 1, caractérisé en ce que la poudre de polylactame est constituée de particules sphériques agglutinées en petits amas d'une taille de 20 à 80 microns et qui présentent de nombreuses microporosités, de 0,01 à 3 microns.

3. Adjuvant de filtration selon la revendication 1 ou 2, caractérisé en ce qu'il assure la rétention de 10⁷ bactéries E. coli par gramme de poudre, après hydratation et mise en suspension dans l'eau de ladite poudre.

4. Adjuvant de filtration selon l'une quelconque des revendications 1 à 3, caractérisé en ce qu'il est obtenu par polymérisation de lactame monocyclique choisi parmi le caprolactame, le lauryllactame ou un mélange des deux.

5. Adjuvant de filtration selon la revendication 4 caractérisé en ce qu'il est obtenu en utilisant, comme dispersant et initiateur de polymérisation, de la silice micronisée.

6. Utilisation de l'adjuvant de filtration selon l'une quelconque des revendications 1 à 5, dans un procédé de traitement de l'eau destiné à la rendre potable.

7. Utilisation selon la revendication 6, en remplacement du traitement chimique de l'eau, notamment du traitement au chlore.

8. Utilisation selon la revendication 6, en remplacement de la filtration sur charbon actif.

9. Procédé de préparation d'eau potable caractérisé en ce qu'il comprend une étape d'utilisation selon l'une quelconque des revendications 6 à 8 de l'adjuvant de poudre de polylactame selon l'une quelconque des revendications 1 à 5.

10. Procédé selon la revendication 9 caractérisé en ce qu'il comprend l'hydratation de la poudre de polylactame puis sa mise en oeuvre sous forme d'une couche additionnelle dans un dispositif de type colonne ou cartouche comprenant plusieurs filtres.

11. Procédé selon la revendication 9 caractérisé en ce qu'il comprend l'hydratation de la poudre de polylactame puis sa mise en oeuvre "en batch" ou par contact en milieu confiné entre la poudre et une solution à décontaminer, suivie d'une filtration sur un dispositif de type colonne ou cartouche.

12. Procédé selon l'une quelconque des revendications 9 à 11 caractérisé en ce qu'il est mis en oeuvre à l'échelle industrielle.

13. Procédé selon la revendication 9 ou 10 caractérisé en ce qu'il est mis en oeuvre dans un dispositif portable, destiné à la décontamination de l'eau de boisson individuelle.
